# EUROPÄISCHE PATENTANMELDUNG

(11) **EP 1 958 502 A1**
(43) Veröffentlichungstag der Anmeldung: **20.08.2008**
(21) Anmeldenummer: 08000034.2
(22) Anmeldetag: 03.01.2008
(51) Int. Cl.: A01K 29/00

(54) **Aktivitätsdetektor**

(30) Priorität: 01.02.2007 DE 102007005901
(71) Anmelder: ASTRA Gesellschaft für Asset Management mbH & Co. KG, 30890 Barsinghausen (DE)
(72) Erfinder: Stobbe, Anatoli, 30890 Barsinghausen (DE); Scheffer, Hartmut, 31559 Haste (DE)
(74) Vertreter: Patentanwälte Thömen & Körner

(57) **Zusammenfassung**

Es wird ein Aktivitätsdetektor zur Erfassung und Übertragung von Aktivitätsdaten eines Lebewesens an ein Lesegerät beschrieben.

Der Aktivitätsdetektor umfasst einen Bewegungssensor, ein mit dem Bewegungssensor verbundenes Erfassungs- und Übertragungsgerät und eine das Erfassungs- und Übertragungsgerät speisende Energiequelle mit einem Energiespeicher. Der Aktivitätsdetektor umfasst ferner einen kinetische Energie in elektrische Energie wandelnden elektrischer Generator, der über einen Gleichrichter mit dem elektrischen Energiespeicher verbunden ist.

## Beschreibung

Die Erfindung betrifft einen Aktivitätsdetektor nach dem Oberbegriff des Anspruchs 1.

Bei der Züchtung und Haltung von Tieren ist es hilfreich, tierspezifische Daten zu erfassen, deren Auswertung Hinweise auf das Verhalten, den Gesundheitszustand und die Paarungsbereitschaft liefert. Wichtig ist dabei eine kontinuierliche Datenerfassung und zeitnahe Datenauswertung auch bei Freilandhaltung zu ermöglichen ohne dabei die tiergerechte Nahrungsaufnahme, Ruhephase und Bewegungsphase einzuschränken.

Es ist bekannt, Tiere mit einem batteriegespeisten Aktivitätsdetektor auszustatten, der Aktivitätsdaten erfasst und speichert und eine Übertragung zu einem Lesegerät ermöglicht. Um einen kontinuierlichen störungsfreien Betrieb zu ermöglichen, ist ein rechtzeitiger Batteriewechsel erforderlich, was sehr zeit- und personalaufwendig ist, da die Tiere eingefangen werden müssen und so regelmäßig gestört werden.

Der Erfindung liegt die Aufgabe zugrunde, einen Aktivitätsdetektor zu schaffen, der einen autarken, wartungsfreien Betrieb ermöglicht.

Dieser Aufgabe wird bei einem Aktivitätsdetektor nach dem Oberbegriff des Anspruchs 1 durch die weiteren Merkmale dieses Anspruchs gelöst.

Weiterbildungen und vorteilhafte Ausgestaltungen ergeben sich aus den Unteransprüchen.

Bei der erfindungsgemäßen Lösung wird durch einen elektrischen Generator kinetische Energie in elektrische Energie zur Speisung des Erfassungs- und Übertragungsgeräts umgewandelt. Dadurch wird die zur Speisung des Erfassungs- und Übertragungsgeräts nötige elektrische Energie intern selbst erzeugt und gespeichert, so dass ein zyklischer Austausch von Batterien entfallen kann.

Der elektrische Generator kann einen durch Bewegungen des Lebewesens verlagerbaren Massekörper umfassen. Durch die Massenträgheit verlagert sich der Massenkörper bei Bewegungen des Lebewesens im Gehäuse des Aktivitätsdetektors und ermöglicht so die Bewegungsenergie des Lebewesens zur Energieerzeugung mittelbar zu nutzen.

Der Massekörper kann als dreh- oder schwenkbarer Excenter ausgebildet sein. Alternativ kann der Massekörper als Pendel ausgebildet sein.

Der Massekörper kann so eine vorgegebene Bewegungsbahn beschreiben, die eine präzise Kopplung mit anderen mechanischen Komponenten oder mit magnetischen Komponenten ermöglicht.

Weiter kann der Massekörper mit einem mechanischen Energiespeicher gekoppelt sein, der intervallweise zur Erzeugung elektrischer Energie entladbar ist.

Dadurch lässt sich für die elektrische Energieerzeugung ein vergleichsweise großer mechanischer Energieimpuls nutzen.

Bei einer praktischen Ausgestaltung ist der elektrische Generator durch den Bewegungssensor gebildet.

Durch die gemeinsame Nutzung des Bewegungssensors auch als elektrischer Generator wird der Aufwand an Bauteilen reduziert und eine kleine Baugröße erzielt, was sich wiederum positiv auf den Tragekomfort und eine geringe Beschädigungsgefahr auswirkt.

Der Bewegungssensor umfasst wenigstens einen auf einer Bewegungsbahn geführten Permanentmagneten sowie wenigstens eine nahe der Bewegungsbahn angeordnete Induktionsspule.

Hierdurch wird ein hoher energetischer Wirkungsgrad erzielt.

Vorzugsweise ist der wenigstens eine Permanentmagnet als Pendel in einem Schwenklager gelagert.

Diese Ausführung ist mechanisch besonders einfach und reibungsarm. Elektrische Energie wird bereits bei kleinsten Pendelbewegungen erzeugt und größere Pendelbewegungen steigern die Energieausbeute.

Die wenigstens eine Induktionsspule kann auf einem Anker angeordnet sein und der Anker Pole aufweisen, die an die kreisbogenförmige oder kugelschalenförmige Bewegungsbahn des wenigstens einen Permanentmagneten angrenzen.

Auf diese Weise wird eine enge Kopplung zwischen dem wenigsten einen Permanentmagneten und der wenigsten einen Induktionsspule auf der Bewegungsbahn des Permanentmagneten erzielt. Mit weiteren Permanentmagneten und/oder Induktionsspulen und Polen kann die zur Energieerzeugung nutzbare Bewegungsstrecke der Permanentmagneten vergrößert werden, so dass auch große Pendelausschläge optimal zur Erhöhung der Energieausbeute genutzt werden können.

Der elektrischen Energiespeicher kann einen Teilspeicher großer Kapazität und einen Teilspeicher kleiner Kapazität umfassen.

Durch den Teilspeicher kleiner Kapazität steht bereits nach kurzer Ladezeit eine für den Betrieb des Erfassungs- und Übertragungsgeräts ausreichende Betriebsspannung zur Verfügung. Der Teilspeicher großer Kapazität kann nach Aufladung auch Phasen geringer Energieerzeugung in Ruhezeiten des Lebewesens überbrücken.

Der Teilspeicher großer Kapazität kann als Kondensator oder ladbarer Akku oder pufferbare Batterie und der Teilspeicher kleiner Kapazität als Kondensator ausgebildet sein.

Während ein Kondensator oder ein Akku Tendenzen zur Selbstentladung zeigen, aber wieder aufladbar sind, kann eine Batterie zwar nicht geladen werden, aber ihre Lebensdauer durch Pufferung erheblich verlängert werden.

Vorzugsweise umfasst das Erfassungs- und Übertragungsgerät eine Steuerlogik, einen Datenspeicher, einen Sendeempfänger für den LF-Bereich, nämlich einem Frequenzbereich zwischen 100 und 140 kHz, und eine induktive Antenne, wobei die Steuerlogik ein Zählwerk und einen Timer zur Erfassung und Speicherung von Bewegungsdaten aus der Menge Bewegungsimpulse, Bewegungsamplitude, verknüpft mit Zeitmarken umfasst.

Exakte Bewegungsdaten können so mit hoher Auflösung erfasst, zeitgenau zwischengespeichert und über eine kurze Distanz leistungsarm übertragen werden. Dies erfolgt durch Lesegeräte mit Leseantennen in der Nähe von Tränken, Futterstellen, Unterständen oder Melkständen, die von den Tieren gewöhnlich regelmäßig aufgesucht werden.

Weiter kann mittels der Steuerlogik nach einer vom Empfänger empfangenen Datenabfrage der Sender zur Übertragung einer gespeicherter Identnummer und der erfassten und gespeicherten Bewegungsdaten verknüpft mit Zeitmarken aktiviert werden.

Dadurch kann die Übertragung der gespeicherten Daten vom Erfassungs- und Übertragungsgerät zum Lesegerät durch einen externen Abrufbefehl des Lesegerätes eingeleitet werden. Der Sender des Übertragungsgerätes wird nur dann aktiviert, wenn auch ein Datenempfang gewährleistet ist.

Weiter kann die induktive Antenne zusätzlich als Energieempfänger ausgebildet und mit dem Ladegerät verbunden sein.

Dadurch ist es möglich, den Energiespeicher des Aktivitätsdetektors vor der Installation am Lebewesen bereits mit einer Erst- oder Grundladung auszustatten, die dann eine sofortige Datenerfassung ermöglicht. Es muss nicht abgewartet werden, bis der Energiespeicher durch den Bewegungssensor allmählich aufgeladen wird. Außerdem kann eine Ergänzung der Ladung des Energiespeichers auch vorgenommen werden, wenn sich das Lebewesen in der Nähe der Leseantenne eines Lesegerätes aufhält.

Gemäß einer Weiterbildung können zusätzliche Sensoren aus der Menge Lagesensor, Temperatursensor, Feuchtesensor mit dem Erfassungs- und Übertragungsgerät verbunden sein und deren Daten ebenfalls speicherbar und übertragbar sein.

Durch diese weiteren Sensoren lassen sich zusätzliche lebewesenspezifischen Daten gewinnen, die gemeinsam mit Bewegungsdaten ausgewertet werden können und ergänzende Rückschlüsse auf das Verhalten, den Gesundheitszustand und die Paarungsbereitschaft liefern oder auch zur Gültigkeitsprüfung der erfassten Bewegungsdaten herangezogen werden können.

Das Erfassungs- und Übertragungsgerät kann einen zusätzlichen Empfänger im VLF-Bereich, nämlich im Frequenzbereiche zwischen 6 und 10 kHz, zum Empfang von Bakendaten von Ortsbaken umfassen, wobei die Bakendaten ebenfalls speicherbar und übertragbar sind.

Aus den bekannten Standorten der Ortsbaken kann so in Verbindung mit den Bakendaten ein Bewegungsprofil der Lebewesen erstellt werden, das weiter ergänzende Rückschlüsse auf das Verhalten, den Gesundheitszustand und die Paarungsbereitschaft liefert.

Das Erfassungs- und Übertragungsgerät kann einen zusätzlichen Sender im UHF-Bereich, nämlich im Frequenzbereich zwischen 400 und 900 MHz, umfassen, über den gespeicherte Daten aus der Menge Identnummer, Bewegungsdaten, Sensordaten, Bakendaten verknüpft mit Zeitmarken oder durch kombinierte Auswertung von Daten aus der Menge Identnummer, Bewegungsdaten, Sensordaten, Bakendaten generierte Alarmsignale zeit- orts- oder ereignisgesteuert zu einem Lesegerät (54) übertragbar sind.

Dadurch können gespeicherte Daten auch unabhängig von einer Annäherung an eine Leseantenne eines Lesegerätes im LF-Bereich und damit über eine größere Entfernung übertragen werden. Dies kann zu einstellbaren Zeiten oder auch durch Initialisierung einer Ortsbake erfolgen, deren Bakendaten dann ebenfalls übertragen werden.

Auch eine ereignisgesteuerte Übertragung durch interne Auswertung und Bewertung der Sensordaten ist möglich. Durch eine interne Auswertung und Bewertung der Sensordaten können auch Alarmsignale generiert und übertragen werden, wenn das Lebewesen bei Verletzung, Krankheit, Tod, Ausbruch aus einer Umzäunung oder sonstigen Beeinträchtigungen nicht die mit Lesegeräten und Leseantennen für den LF-Bereich ausgestatteten Orte aufsucht oder aufsuchen kann oder sofortige Hilfe benötigt.

Nachfolgend wird die Erfindung anhand von Ausführungsbeispielen erläutert, die in der Zeichnung dargestellt sind.

In der Zeichnung zeigen:
- Fig. 1: ein Blockschaltbild eines Aktivitätsdetektors mit einem zusätzlich als elektrischer Generator ausgebildeten Bewegungssensor und
- Fig. 2: ein Blockschaltbild eines erweiterten Aktivitätsdetektors mit einem Lesegerät und mit Ortbaken.

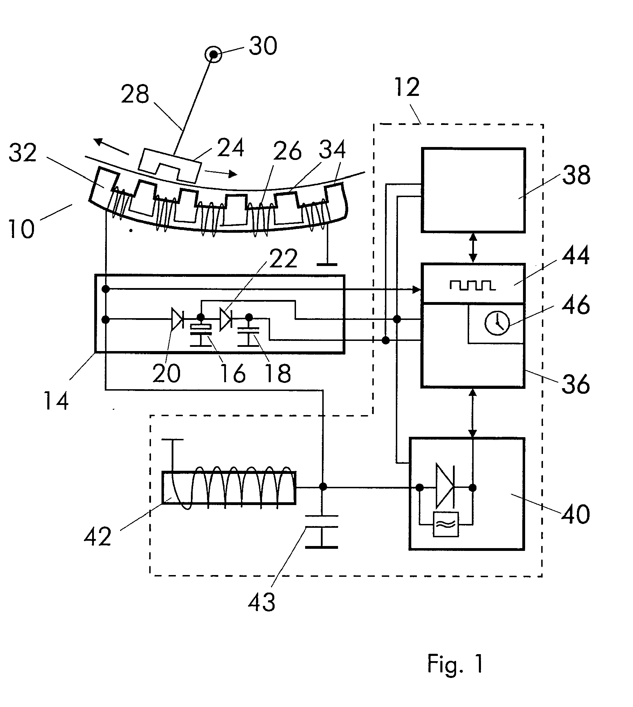

Fig. 1 zeigt ein Blockschaltbild eines Aktivitätsdetektors mit einem zusätzlich als elektrischer Generator ausgebildeten Bewegungssensor 10. Der Aktivitätsdetektor umfasst ein Erfassungs- und Übertragungsgerät 12 mit einer Steuerlogik 36, einem Datenspeicher 38, einem Sendeempfänger 40 für den LF-Bereich und eine induktive Antenne 42, die mit einer Kapazität 43 einen Schwingkreis bildet. Als Bestandteile weist die Steuerlogik 36 ein Zählwerk 44 und einen Timer 46 auf.

Das Erfassungs- und Übertragungsgerät 12 ist mit einer Energiequelle 14 mit einem Energiespeicher 16, 18 verbunden. Der zusätzlich als elektrischer Generator ausgebildete Bewegungssensor 10 ist über Gleichrichter 20, 22 mit dem Energiespeicher 16, 18 verbunden. Dabei ist der Energiespeicher in einen Teilspeicher 16 großer Kapazität und einen Teilspeicher 18 kleiner Kapazität für eine kurze Ladezeit unterteilt. Auch der Gleichrichter ist in einen Teilgleichrichter 20 und einen Teilgleichrichter 22 unterteilt. Dabei entkoppelt der Teilgleichrichter 22 Teilspeicher 18 kleiner Kapazität vom Teilspeicher 16 großer Kapazität, um eine Entladung des Teilspeichers 18 durch den Teilspeicher 16 zu verhindern.

Der Bewegungssensor 10 umfasst einen als Pendel 28 in einem Schwenklager 30 gelagert Permanentmagneten 24, der auf einer kreisbogenförmigen Bewegungsbahn schwingen kann. Ferner umfasst der Bewegungssensor 10 einen Anker 32 mit Induktionsspulen 26 und Polen 34, die an die kreisbogenförmige Bewegungsbahn des Permanentmagneten 24 angrenzen. Die Induktionsspulen 26 sind über die Gleichrichter 20, 22 mit dem Energiespeicher 16, 18 der Energiequelle 14 verbunden.

Bei Bewegungsimpulsen eines Lebewesens, an dem der Aktivitätssensor installiert ist, gerät das Pendel 28 an seinem Schwenkgelenk 30 in Pendelschwingungen. Der Permanentmagnet 24 überstreicht dabei die Pole 34 des Ankers 32 und induziert durch Änderungen des magnetischen Flusses im Anker 32 elektrische Spannungen in den Induktionsspulen 26. Es handelt sich dabei um Wechselspannungen, die durch den Gleichrichter 20, 22 gleichgerichtet werden und den Energiespeicher 16, 18 laden, wobei zunächst der Teilspeicher 18 aufgrund seiner kleinen Kapazität eine für die Speisung der Steuerlogik 36 und des Datenspeichers 38 ausreichende Betriebsspannung aufbaut und anschließend auch der Teilspeicher 16 die zum Betrieb des Sendeempfängers 40 benötigte Energie bereitstellen kann. Eine Anfangsladung oder Ergänzungsladung des Energiespeichers 16, 18 kann auch durch über die Antenne 42 zugeführte HF-Energie und Gleichrichtung durch den Gleichrichter 20, 22 erfolgen.

Die vom Bewegungssensor 10 gelieferte Wechselspannung gelang auch unmittelbar zur Steuerlogik, und wird mittels eines Zählwerks 44 erfasst. Zusätzlich kann auch die Amplitude der Wechselspannung erfasst werden. Die vom Zählwerk 44 über die Wechselspannung erfassten Pendelbewegungen stellen ein Maß für Bewegung des Lebewesens dar und werden verknüpft mit Zeitmarken eines Timers 46 im Datenspeicher 38 abgelegt.

Zum Abfragen einer Identnummer und der mit Zeitmarken verknüpften Bewegungsdaten erhält der Empfänger des Sendeempfängers 40 über die induktive Antenne 42 von einem Lesegerät einen Anforderungsbefehl, der von der Steuerlogik 36 ausgewertet wird. Die Steuerlogik 36 aktiviert dann den Sender des Sendeempfängers 40 und übermittelt nacheinander die Identnummer und die mit Zeitmarken verknüpften Bewegungsdaten zum Lesegerät. Die Kommunikation zwischen dem Lesegerät und dem Sendeempfänger 40 kann abhängig von der verwendeten Modulationsart im Halbduplex oder Vollduplex erfolgen.

Parallel zur Datenkommunikation kann die induktive Antenne 42 auch die zum Betrieb des Sendeempfängers oder zum Nachladen des elektrischen Speichers benötigte elektrische Energie vom Lesegerät 54 beziehen.

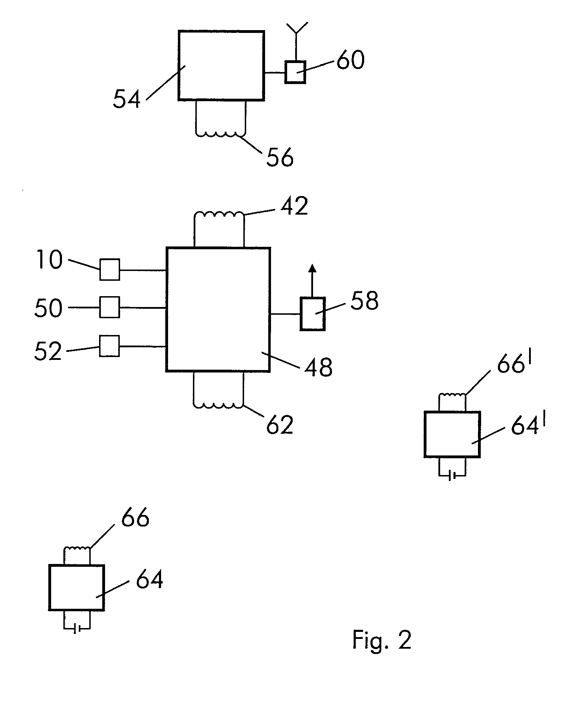

Fig. 2 zeigt ein Blockschaltbild eines erweiterten Aktivitätsdetektors 48 mit einem Lesegerät 54 und mit Ortbaken 64, 64'. Außer dem Bewegungssensor 10 sind weitere Sensoren 50, 52 aus der Menge Lagesensor, Temperatursensor, Feuchtesensor angeschlossen. Auch die Daten dieser Sensoren 50, 52 können verknüpft mit Zeitmarken im Datenspeicher zwischengespeichert und später zum Lesegerät 54 im HF-Bereich über die induktive Antenne 42 des Aktivitätsdetektors 48 und die induktive Antenne 56 des Lesegeräts 54 übertragen werden.

Der Aktivitätsdetektor 48 verfügt noch über einen zusätzlichen UHF-Sender 58, über den gespeicherte Daten oder Alarmsignale zeit- oder ereignisgesteuert zu einem UHF-Empfänger 60 des Lesegeräts 54 übertragen werden können. Durch Zeitsteuerung kann die Übertragung in vorgegebenen Zeitintervallen erfolgen. Bei Ereignissteuerung kann eine Übertragung auch durch die Erfassung anormaler Daten der Sensoren 10, 50, 52 veranlasst werden. Diese Daten können auch als Alarmkriterium ausgewertet werden und ein Alarmsignal erzeugen, z. B. wenn das Lebeweisen längere Zeit nur geringe oder keine Bewegungsaktivitäten zeigt, was auf Krankheit Verletzung oder Tod hindeutet oder hyperaktiv ist, was auf andere gefährliche Einflüsse hinweisen kann.

In Fig. 2 sind weiter Ortsbaken 64, 64' dargestellt, die an mehreren Orten aufgestellt sind und Bakendaten aussenden. Bei Annäherung des Lebewesens an die Ortsbaken 64, 64' werden die Bakenantenne 66, 66' ausgestrahlten Bakendaten über eine zusätzliche induktive Antenne 62 und einen zusätzlichen Empfänger des Aktivitätsdetektors 48 empfangen und ebenfalls verknüpft mit Zeitmarken im Datenspeicher zwischengespeichert. Die mit Zeitmarken verknüpften Bakendaten können ebenfalls zum Lesegerät 54 übertragen werden und ermöglichen die Aufzeichnung der durch die Bakendaten identifizierbaren Standorte und damit die Erstellung eines Bewegungsprofils des Lebewesens.

## Patentansprüche

1. Aktivitätsdetektor zur Erfassung und Übertragung von Aktivitätsdaten eines Lebewesens an ein Lesegerät (54), wobei der Aktivitätsdetektor einen Bewegungssensor (10), ein mit dem Bewegungssensor (10) verbundenes Erfassungs- und Übertragungsgerät (12) und eine das Erfassungs- und Übertragungsgerät (12) speisende Energiequelle (14) mit einem elektrischen Energiespeicher (16, 18) umfasst, **dadurch gekennzeichnet, dass** der Aktivitätsdetektor einen kinetische Energie in elektrische Energie wandelnden elektrischer Generator umfasst, der über einen Gleichrichter (20, 22) mit dem elektrischen Energiespeicher (16, 18) verbunden ist.

2. Aktivitätsdetektor nach Anspruch 1, **dadurch gekennzeichnet, dass** der elektrische Generator einen durch Bewegungen des Lebewesens verlagerbaren Massekörper umfasst.

3. Aktivitätsdetektor nach Anspruch 2, **dadurch gekennzeichnet, dass** der Massekörper als dreh- oder schwenkbarer Excenter ausgebildet ist.

4. Aktivitätsdetektor nach Anspruch 2, **dadurch gekennzeichnet, dass** der Massekörper als Pendel ausgebildet ist.

5. Aktivitätsdetektor nach einem der Ansprüche 2 bis 4, **dadurch gekennzeichnet, dass** der Massekörper mit einem mechanischen Energiespeicher gekoppelt ist, der intervallweise zur Erzeugung elektrischer Energie entladbar ist.

6. Aktivitätsdetektor nach einem der Ansprüche 1 bis 5, **dadurch gekennzeichnet, dass** der elektrische Generator durch den Bewegungssensor (10) gebildet ist.

7. Aktivitätsdetektor nach einem der Ansprüche 1 bis 6, **dadurch gekennzeichnet, dass** der Bewegungssensor (10) oder der Generator wenigstens einen auf einer Bewegungsbahn geführten Permanentmagneten (24) sowie wenigstens eine nahe der Bewegungsbahn angeordnete Induktionsspule (26) umfasst.

8. Aktivitätsdetektor nach Anspruch 7, **dadurch gekennzeichnet, dass** der wenigstens eine Permanentmagnet (24) als Pendel (28) in einem Schwenklager (30) gelagert ist.

9. Aktivitätsdetektor nach Anspruch 8, **dadurch gekennzeichnet, dass** wenigstens eine Induktionsspule (26) auf einem Anker (32) angeordnet ist und der Anker (32) Pole (34) aufweist, die an die kreisbogenförmige oder kugelschalenförmige Bewegungsbahn des wenigstens einen Permanentmagneten (24) angrenzen.

10. Aktivitätsdetektor nach einem der Ansprüche 1 bis 9, **dadurch gekennzeichnet, dass** der elektrischen Energiespeicher einen Teilspeicher (16) großer Kapazität und einen Teilspeicher kleiner Kapazität (18) umfasst.

11. Aktivitätsdetektor nach Anspruch 10, **dadurch gekennzeichnet, dass** der Teilspeicher (16) großer Kapazität als Kondensator oder ladbarer Akku oder pufferbare Batterie und der Teilspeicher kleiner Kapazität (18) als Kondensator ausgebildet ist.

12. Aktivitätsdetektor nach einem der Ansprüche 1 bis 11, **dadurch gekennzeichnet, dass** das Erfassungs- und Übertragungsgerät (12) eine Steuerlogik (36), einen Datenspeicher (38), einen Sendeempfänger (40) für den LF-Bereich und eine induktive Antenne (42) umfasst, wobei die Steuerlogik (36) ein Zählwerk (44) und einen Timer (46) zur Erfassung und Speicherung von Bewegungsdaten aus der Menge Bewegungsimpulse, Bewegungsamplitude, verknüpft mit Zeitmarken umfasst.

13. Aktivitätsdetektor nach einem der Ansprüche 1 bis 12, **dadurch gekennzeichnet, dass** mittels der Steuerlogik (36) nach einer vom Empfänger des Sendeempfängers (40) empfangenen Datenabfrage der Sender des Sendeempfängers (40)zur Übertragung einer gespeicherter Identnummer und der erfassten und gespeicherten Bewegungsdaten verknüpft mit Zeitmarken aktivierbar ist.

14. Aktivitätsdetektor nach einem der Ansprüche 1 bis 13, **dadurch gekennzeichnet, dass** die induktive Antenne (42) zusätzlich als Energieempfänger ausgebildet und mit dem Gleichrichter (20, 22) verbunden ist.

15. Aktivitätsdetektor nach einem der Ansprüche 1 bis 14, **dadurch gekennzeichnet, dass** zusätzliche Sensoren (50, 52) aus der Menge Lagesensor, Temperatursensor, Feuchtesensor mit dem Erfassungs- und Übertragungsgerät (12) verbunden sind und deren Daten ebenfalls speicherbar und übertragbar sind.

16. Aktivitätsdetektor nach einem der Ansprüche 1 bis 15, **dadurch gekennzeichnet, dass** das Erfassungs- und Übertragungsgerät (12) einen zusätzlichen Empfänger im VLF-Bereich zum Empfang von Bakendaten von Ortsbaken (64, 64')umfasst und dass die Bakendaten ebenfalls speicherbar und übertragbar sind.

17. Aktivitätsdetektor nach einem der Ansprüche 1 bis 16, **dadurch gekennzeichnet, dass** das Erfassungs- und Übertragungsgerät (12) einen zusätzlichen Sender (58) im UHF-Bereich umfasst, über den gespeicherte Daten aus der Menge Identnummer, Bewegungsdaten, Sensordaten, Bakendaten verknüpft mit Zeitmarken oder durch kombinierte Auswertung von Daten aus der Menge Identnummer, Bewegungsdaten, Sensordaten, Bakendaten generierte Alarmsignale zeit- orts- oder ereignisgesteuert zu einem Lesegerät (54) übertragbar sind.
